# EUROPEAN PATENT SPECIFICATION

(11) **EP 4 623 758 B1**
(45) Date of publication and mention of the grant of the patent: **25.03.2026**
(21) Application number: 24175529.7
(22) Date of filing: 13.05.2024
(51) Int. Cl.: A47C 27/06, A47C 27/07, A47C 23/043

(54) **SPRING HAVING POSITIONING RING AND ELASTIC MATTRESS**
FEDER MIT POSITIONIERUNGSRING UND ELASTISCHER MATRATZE
RESSORT AYANT UN ANNEAU DE POSITIONNEMENT ET MATELAS ÉLASTIQUE

(30) Priority: 29.03.2024 CN 202410374059
(43) Date of publication of application: 01.10.2025
(73) Proprietor: New-Tec Integration (Xiamen) Co., Ltd., Xiamen, Fujian 361100 (CN)
(72) Inventor: LENG, Luhao, Xiamen, 361100 (CN)
(74) Representative: Verscht, Thomas Kurt Albert

(56) References cited:
- EP-A1- 0 497 615
- US-A- 3 076 203

## Description

### RELATED APPLICATIONS

This application claims priority to Chinese patent application number 202410374059.0, filed on March 29, 2024.

### FIELD OF THE DISCLOSURE

The present disclosure relates to the technical field of elastic mattresses, and in particular relates to a spring having a positioning ring and an elastic mattress.

### BACKGROUND OF THE DISCLOSURE

Elasticity of existing elastic mattresses made of springs defines an integrated whole. When a part of the elastic mattress is compressed, springs around the part will be stressed. Therefore, the elastic mattress can withstand greater stress, while local elasticity of the elastic mattress cannot change with a change of posture of a human body.

The above-mentioned deficiencies are mainly caused by an installation structure of the elastic mattress. Although each of the springs of the elastic mattress should provide elasticity independently, upper ends of the springs of the elastic mattress in traditional elastic mattresses are usually connected together, so that the springs are jointly stressed so as to provide an elastic force together. Therefore, it is very important to ensure that the springs are independently stressed and the springs are not separated from each other, so that the elastic mattress can deform synchronously with the posture of the human body.

With regard to the prior art attention is drawn to US 3 076 203 from which a spring element for mattress and a bed spring are known.

Further, from EP 0 497 615 A1 a spring assembly for a cushion or mattress is known.

Based on the above-mentioned technical problems, the inventor designed a spring with a connecting waist ring, so that the springs can be connected. However, the connecting waist ring and a spring body may undergo relative displacement during use in a test, and connection stability of the springs is affected.

### BRIEF SUMMARY OF THE DISCLOSURE

An objective of the present disclosure is to provide a spring having a positioning ring and an elastic mattress to solve the deficiencies in the existing techniques.

A technical solution of the present disclosure is as follows.

Two or more springs having at least one positioning ring, each of the two or more springs comprises a spring body having a spiral shape formed by winding, two ends of the spring body are wound to form two end surface rings, the spring body comprises the at least one positioning ring, the at least one positioning ring is a winding ring of the spring body, the at least one positioning ring is substantially parallel to the two end surface rings or is substantially perpendicular to a direction of an elastic force of the spring body, and the at least one positioning ring is at least spaced apart from a stressing end for 1/4 of a length of the two or more springs, wherein each of the at least two springs comprises one or more connecting waist rings, the at least one positioning ring is buckled to one or more inner walls of the one or more connecting waist rings, and one or more outer walls of the one or more connecting waist rings each comprise a connecting structure; and two of the at least two springs are connected through the connecting structure of a first spring of the at least two springs and the connecting structure of a second spring of the at least two springs adjacent to the first spring.

In some preferred embodiments, a length of the at least one positioning ring extends no less than 180 degrees.

In some preferred embodiments, the one or more connecting waist rings comprise at least two connecting waist rings, the at least one positioning ring comprises a plurality of positioning rings, and the at least two connecting waist rings are respectively buckled to the spring body through the plurality of positioning rings.

In some preferred embodiments, the inner wall of the two or more connecting waist rings comprises a positioning groove parallel to each of the at least one positioning ring, a width of the positioning groove is no more than a height of each of the at least one positioning ring after being compressed, and each of the at least one positioning ring is buckled to an inner side of the positioning groove.

In some preferred embodiments, a length of the at least one positioning ring extends no less than 360 degrees.

In some preferred embodiments, the at least one positioning ring comprises two positioning rings, the inner wall of the one or more connecting waist rings comprises two positioning protrusions along the direction of the elastic force of the spring body, and the two positioning protrusions are buckled to the two positioning rings.

In some preferred embodiments, a distance between a first side of a first positioning protrusion of the two positioning protrusions and a first side of a second positioning protrusion of the two positioning protrusions facing away from the first side of the first positioning protrusion is no less than an initial height of a spring wire of the spring body between the two positioning rings, and the two positioning protrusions are buckled between the two positioning rings.

In some preferred embodiments, a distance between a second side of a first positioning protrusion of the two positioning protrusions and a second side of a second positioning protrusion of the two positioning protrusions facing the second side of the first positioning protrusion is no more than a compressed height of a spring wire of the spring body between the two positioning rings, and the two positioning rings are buckled between the two positioning protrusions.

In some preferred embodiments, the connecting structure of the first spring and the connecting structure of the second spring are connected together through a pin connection, a buckle connection, an insertion connection, or a fixation using a positioning block.

An elastic mattress, wherein an elastic layer of the elastic mattress comprises a plurality of the two or more springs.

The present disclosure at least has the following advantages.
1. In the present disclosure, the two or more connecting waist rings are sleeved on the spring body of the two or more springs, and the one or more connecting waist rings each comprises the connecting structure for mutual cooperation to achieve a connection between springs of the two or more springs. The two or more springs are connected together merely through the one or more connecting waist rings to ensure that the two or more springs to be not separated from each other, and relative independence between the two or more springs are ensured at the same time. The two or more springs will be stressed independently and move independently, so as to reduce interference between the two or more springs in the elastic mattress and improve comfort of the elastic mattress.
2. In the present disclosure, the spring body comprises the at least one positioning ring, and the at least one positioning ring is a winding ring of the spring body. A length of the at least one positioning ring extends no less than 180 degrees. The at least one positioning ring is substantially parallel to the two end surface rings or is substantially perpendicular to the direction of the elastic force of the spring body, so as to position the one or more connecting waist rings in subsequent assembly processes to effectively prevent displacement of the one or more connecting middle rings during use, and convenience and stability of the connection between the springs is improved.

An inclination angle of an ordinary winding ring is difficult to determine, and production of the positioning groove of the one or more connecting waist rings is hardly standardized for the ordinary winding ring. The at least one positioning ring is designed to be substantially parallel to the two end surface rings or substantially perpendicular to the direction of the elastic force of the spring body, and a location and a shape of the positioning groove can be standardized.

In addition, an inclination angle of the positioning ring has smaller variation during an elastic movement of the one or more springs. The at least one positioning ring can especially remain substantially parallel to the two end surface rings or substantially perpendicular to the direction of the elastic force of the spring body during the elastic movement when the length of the at least one positioning ring extends no less than 360 degrees. Therefore, the one or more connecting waist rings can be stably connected to the at least one positioning ring to be not easily dislocated during use.

### BRIEF DESCRIPTION OF THE DRAWINGS

FIG. 1 illustrates a view of a structure of one or more springs in Embodiment 1;
FIG. 2 illustrates an exploded view of the one spring in Embodiment 1;
FIG. 3 illustrates a view of a structure of the one spring in Embodiment 1, wherein a flexible sleeve and an end cover are illustrated in a cross-sectional view;
FIG. 4 illustrates a rear view of the structure shown in FIG. 3;
FIG. 5 illustrates a left view of the structure shown in FIG. 3;
FIG. 6 illustrates a view of a structure of one spring in Embodiment 2;
FIG. 7 illustrates a view of a structure of the one spring sectioned longitudinally in Embodiment 2, wherein a positioning ring is not sectioned;
FIG. 8 illustrates a front view of the structure shown in FIG. 7;
FIG. 9 illustrates a left view of the structure shown in FIG. 7;
FIG. 10 illustrates a view of a structure of a plurality of the two or more springs connected together in Embodiment 2;
FIG. 11 illustrates a view of a structure of one spring sectioned longitudinally in Embodiment 3, wherein a positioning ring is not sectioned;
FIG. 12 illustrates a left view of the structure shown in FIG. 11;
FIG. 13 illustrates a view of a structure of one spring in Embodiment 4;
FIG. 14 illustrates a longitudinal-sectional view of Embodiment 4; and
FIG. 15 illustrates a longitudinal-sectional view of Embodiment 5.

Reference numbers: spring body 1, end surface ring 11, positioning ring 12, cushioning portion 13, connecting waist ring 2, connecting structure 21, positioning groove 22, positioning protrusion 23, flexible sleeve 3, and end cover 31

### DETAILED DESCRIPTION OF THE EMBODIMENTS

The technical solution of the present disclosure will be further explained and described below in combination with the specific embodiments.

The technical solutions in the embodiments of the present invention will be clearly and completely described in combination with the accompanying drawings in the embodiments of the present invention. It is obvious that the described embodiments are preferred embodiments of the present invention instead of being considered as exclusion of other embodiments.

In the claims, the description, and the drawings of the present disclosure, unless other expressly specified, with respect to orientation terms, for example, terms "height", "upper end", "top", "bottom", "inner", "outer", "upper", "lower", "front", "rear" , etc., indicate orientations or positional relationships based on orientations and positional relationships shown in the drawings, so as to easily describe the present disclosure and simplify the description, rather than indicating or implying that the referenced device or element should have a specific orientation or be constructed and operated in a specific orientation and therefore should not be understood as a limitation of the specific protective scope of the present disclosure.

In the present disclosure, due to production limitations, "substantially parallel to" means that an intersecting angle between a positioning ring and an end surface ring is less than 10 degrees, and "substantially perpendicular to" means that an intersecting angle between the positioning ring and a direction of an elastic force of a spring body is 80 degrees to 100 degrees.

A stressing end of one or more springs or the spring body refers to an end that contacts a user and is subjected to stress from the user. In the following embodiments, the stressing end refers to a top of the spring body or a top of the one or more springs.

The spring body is formed by spirally winding a spring wire, and the spring wire winds 360 degrees to form a winding ring.

### Embodiment 1

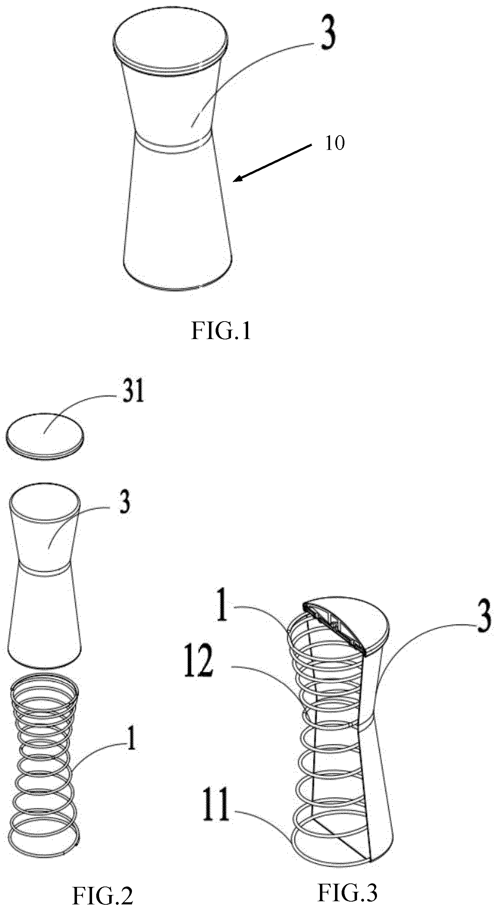

This embodiment provides one or more springs 10, as shown in FIGS. 1-5. The two or more springs 10 each comprises a spring body 1, a flexible sleeve 3, and an end cover 31. Two ends of the spring body 1 are wound to form two end surface rings 11. A winding ring in a middle of the spring body 1 forms a positioning ring 12, and the positioning ring 12 is parallel to the two end surface rings 11.

In this embodiment, the positioning ring 12 is formed at the middle of the spring body1. In other alternative embodiments, the positioning ring 12 can be disposed at any position of the spring body 1 that is at least spaced apart from a stressing end of the spring body 1 for 1/4 of a length of the two or more springs 10. A main function of the positioning ring 12 is to position a connecting waist ring during a subsequent installation process, and the positioning ring 12 is disposed at the aforementioned position to ensure better independence of the two or more springs 10 after the two or more springs 10 are connected together.

The flexible sleeve 3 wraps the spring body 1, and the end cover 31 is disposed on the stressing end of the two or more springs 10. The spring body 1 is wrapped with the flexible sleeve 3 to prevent adjacent spring bodies 1 of the two or more springs 10 from being entangled during elastic movement, thereby reducing interference between the two or more springs 10. The end cover 31 forms a spherical surface at the stressing end to increases a contact area between the two or more springs 10 and the user, thereby reducing an intensity of pressure. Furthermore, the end cover 31 can be made of elastic filling materials to provide better cushioning performance for the two or more springs 10, thereby improving comfort.

An elastic mattress, an elastic layer of the elastic mattress comprises a plurality of the two or more springs 10.

### Embodiment 2

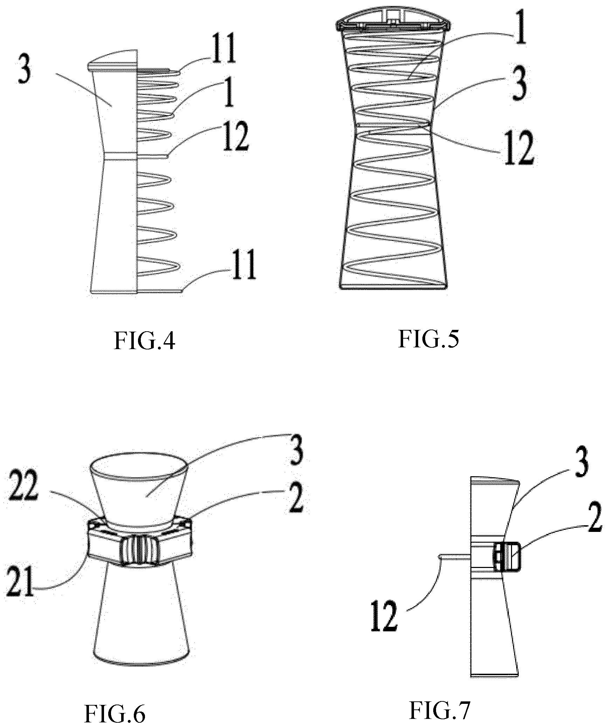

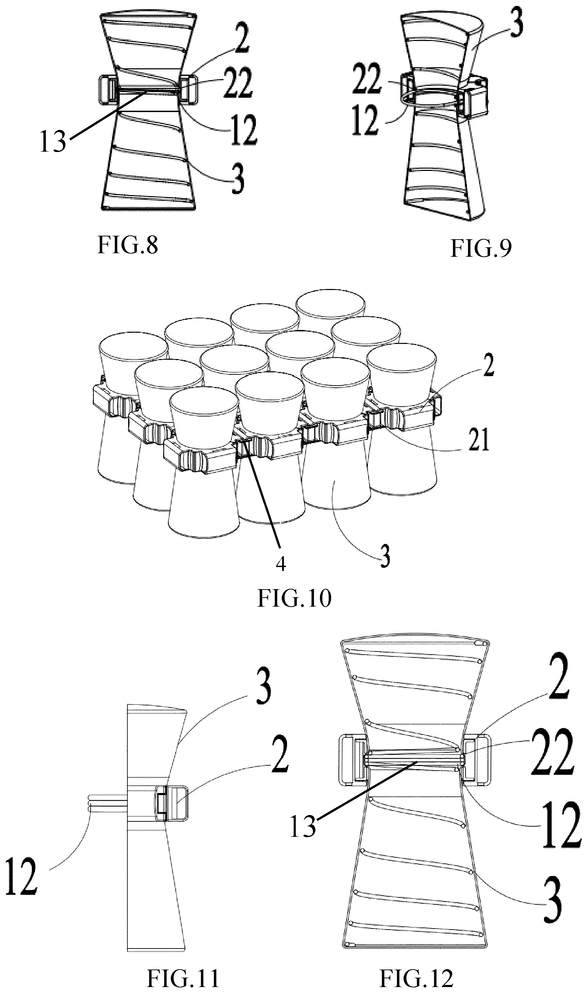

Referring to FIGS. 6-10, the two or more springs 10 of this embodiment each comprises a spring body 1, a connecting waist ring 2, and a flexible sleeve 3. Structures of the spring body 1 and the flexible sleeve 3 are similar to those in Embodiment 1. As shown in FIGS. 8 and 9, the positioning ring 12 is perpendicular to a direction of an elastic force of the spring body 1, and the flexible sleeve 3 wraps an outer side of the spring body 1.

The connecting waist ring 2 has a connecting structure 21 and a positioning groove 22. The connecting waist ring 2 of a first one of the two or more springs 10 and the connecting waist ring 2 of a second one of the two or more springs 10 are connected to each other through the connecting structure 21, so that two of the two or more springs 10 are connected to each other. As shown in FIGS. 7 and 8, an inner wall of the connecting waist ring 2 comprises the positioning groove 22. The positioning groove 22 is parallel to the positioning ring 12, and the positioning ring 12 is buckled to the positioning groove 22 though the flexible sleeve 3.

In this embodiment, a length of the positioning ring 12 extends for 360 degrees, and a width of the positioning groove 22 is a diameter of a spring wire 13 of the positioning ring 12. In other alternative embodiments, the length of the positioning ring 12 extends more than 360 degrees, and the width of the positioning groove 22 is a total height of the positioning ring 12 after being compressed along the direction of the elastic force.

In this embodiment, the connecting waist ring 2 is sleeved outside of the spring body 1 and the flexible sleeve 3. In other alternative embodiments, the connecting waist ring 2 can be partially wrapped in the flexible sleeve 3.

The connecting structure 21 comprises four connecting grooves respectively located on a front side, a rear side, a left side, and a right side of the connecting waist ring 2. As shown in FIG. 10, when the two or more springs 10 are connected together,
one of the four connecting grooves of a first spring 10 of the two springs 10 and one of the four connecting grooves of a second spring 10 of the two springs 10 move close to each other to enable the one of the four connecting grooves of the first spring 10 and the one of the four connecting grooves of the second spring 10 to be parallel, and two arms of a U-shaped insertion sheet 4 are inserted into the one of the four connecting grooves of the first spring 10 and the one of the four connecting grooves of the second spring 10.

### Embodiment 3

As shown in FIGS. 11 and 12, this embodiment differs from Embodiment 2 in that the length of the positioning ring 12 extends 1080 degrees, and the width of the positioning groove 22 is three times the diameter of the spring wire 13 of the positioning ring 12 (i.e., a height of the positioning ring 12 after being compressed along the direction of the elastic force). The positioning ring 12 is compressed and buckled in the positioning groove 22.

### Embodiment 4

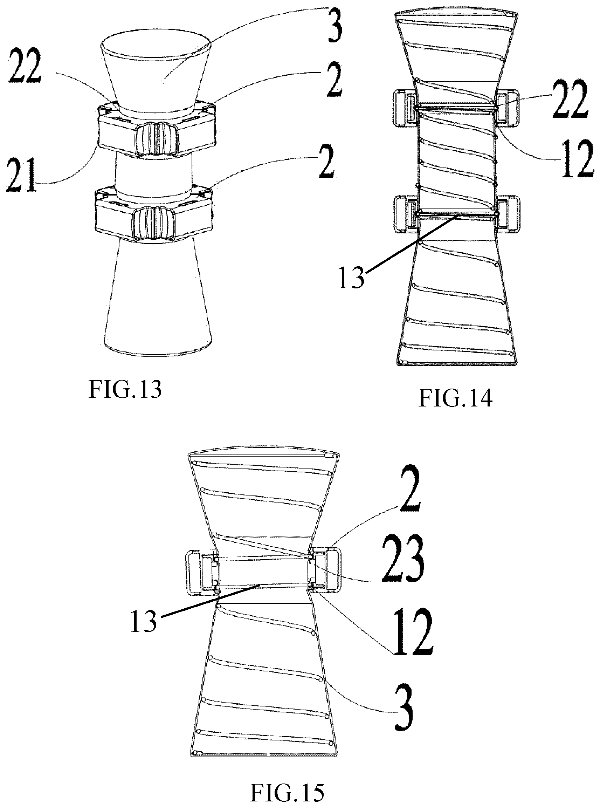

As shown in FIGS. 13 and 14, Embodiment 4 differs from Embodiment 2 in that the spring body 1 comprises two positioning rings 12, each of the two or more springs 10 comprise two connecting waist rings 2, and the two positioning rings 12 are respectively buckled to the two connecting waist rings 2.

When a height of the two or more springs 10 is larger, a connection method using a partial connection structure may lead to poor stability of an elastic mattress formed by the two or more springs 10. This embodiment greatly improves stability and comfort of the elastic mattress by arranging the two positioning rings 12 and the two connecting waist rings 2 in the direction of the elastic force of the two or more springs.

### Embodiment 5

As shown in FIG. 15, Embodiment 5 differs from Embodiment 2 in that the spring body 1 comprises two positioning rings 12, and the inner wall of the connecting waist ring 2 comprises two positioning protrusions 23 that are annular. A distance between a first side of a first positioning protrusion of the two positioning protrusions 23 and a first side of a second positioning protrusion of the two positioning protrusions 23 facing away from the first side of the first positioning protrusion is greater than an initial distance between the two positioning rings 12 (i.e., an initial height of the spring wire 13 of the spring body 1 between the two positioning rings 12). Therefore, when the two positioning protrusions 23 are buckled between the two positioning rings 12, the two positioning rings 12 and the winding ring therebetween (not shown in FIG. 15) are in a stretched state.

In this embodiment, the two positioning rings 12 and the winding ring therebetween are in the stretched state to generate an elastic force to enable the two positioning rings 12 to be buckled to the two positioning protrusions 23 by interference fit, and a connection is firm. In other alternative embodiments, the distance between the first side of the first positioning protrusion and the first side of the second positioning protrusion facing away from the first side of the first positioning protrusion can be no more than the distance between the two positioning rings 12. These embodiments can also enable the connecting waist ring 2 to be sleeved on the spring body 1 through a cooperation between the two positioning protrusions 23 and the two positioning rings 12, although connection stability is slightly weaker than the connection stability of this embodiment.

Furthermore, in other alternative embodiments, the two positioning rings 12 can be buckled between the two positioning protrusions 23. At this time, preferably, a distance between a second side of the first positioning protrusion and a second side of the second positioning protrusion facing the second side of the first positioning protrusion is less than a compressed height of the spring wire 13 of the spring body 1 between the two positioning rings 12. At this time, the spring wire 13 of the spring body 1 between the two positioning rings 12 are compressed between the two positioning protrusions 23, so that the two positioning rings 12 and the two positioning protrusions 23 are connected by the interference fit. However, the technical effect of the present application can also be achieved when the distance between the second side of the first positioning protrusion and the second side of the second positioning protrusion facing the second side of the first positioning protrusion is no less than the compressed length of the spring wire 13 of the spring body 1 between the two positioning rings 12.

The invention may be summarized as follows: Two or more springs having at least one positioning ring and an elastic mattress are provided. Each of the two or more springs comprises a spring body having a spiral shape formed by winding, two ends of the spring body are wound to form two end surface rings, the spring body comprises the at least one positioning ring, the at least one positioning ring is a winding ring of the spring body, the at least one positioning ring is substantially parallel to the two end surface rings or is substantially perpendicular to a direction of an elastic force of the spring body, and the winding ring is at least spaced apart from a stressing end for 1/4. In the present disclosure, the spring body comprises the at least one positioning ring, and the at least one positioning ring is a winding ring of the spring body. A length of the at least one positioning ring extends no less than 180 degrees. The at least one positioning ring is substantially parallel to the two end surface rings or is substantially perpendicular to the direction of the elastic force of the spring body, so as to position the one or more connecting waist rings in subsequent assembly processes to effectively prevent displacement of the two or more connecting middle rings during use, and convenience and stability of the connection between the springs is improved.

The aforementioned embodiments are merely some embodiments of the present invention. and the scope of the invention is not limited thereto. Thus, it is intended that the present invention covers equivalent variations and modifications provided they are made without departing from the appended claims.

## Claims

1. Two or more springs (10) having at least one positioning ring (12), each of the two or more springs (10) comprises a spring body (1) having a spiral shape formed by winding, two ends of the spring body (1) are wound to form two end surface rings (11), wherein the spring body (1) comprises the at least one positioning ring (12), the at least one positioning ring (12) is a winding ring of the spring body (1), the at least one positioning ring (12) is substantially parallel to the two end surface rings (11) or is substantially perpendicular to a direction of an elastic force of the spring body (1), and the at least one positioning ring (12) is at least spaced apart from a stressing end of the spring body (1) for 1/4 of a length of the two or more springs (10), wherein each of the at least two springs (10) comprises one or more connecting waist rings (2), the at least one positioning ring (12) is buckled to one or more inner walls of the one or more connecting waist rings (2), and one or more outer walls of the one or more connecting waist rings (2) each comprise a connecting structure (21); and two of the at least two springs (10) are connected through the connecting structure (21) of a first spring (10) of the at least two springs (10) and the connecting structure (21) of a second spring (10) of the at least two springs (10) adjacent to the first spring (10).

2. The two or more springs (10) according to claim 1, **characterized in that**: a length of the at least one positioning ring (12) extends no less than 180 degrees.

3. The two or more springs (10) according to claim 1 and/or 2, **characterized in that**:
the one or more connecting waist rings comprise at least two connecting waist rings (2), the at least one positioning ring (12) comprises a plurality of positioning rings (12), and the at least two connecting waist rings (2) are respectively buckled to the spring body (1) through the plurality of positioning rings (12).

4. The two or more springs (10) according to any one or more of claims 1 to 3, **characterized in that**: the inner wall of the one or more connecting waist rings (2) comprises a positioning groove (22) parallel to each of the at least one positioning ring (12), a width of the positioning groove (22) is no more than a height of each of the at least one positioning ring (12) after being compressed, and each of the at least one positioning ring (12) is buckled to an inner side of the positioning groove (22).

5. The two or more springs (10) according to any one or more of claims 1 to 4, **characterized in that**: a length of the at least one positioning ring (12) extends no less than 360 degrees.

6. The two or more springs (10) according to any one or more of claims 1 to 5, **characterized in that**: the at least one positioning ring (12) comprises two positioning rings (12), the inner wall of the one or more connecting waist rings (2) comprises two positioning protrusions (23) along the direction of the elastic force of the spring body (1), and the two positioning protrusions (23) are buckled to the two positioning rings (12).

7. The two or more springs (10) according to claim 6, **characterized in that**: a distance between a first side of a first positioning protrusion (23) of the two positioning protrusions (23) and a first side of a second positioning protrusion (23) of the two positioning protrusions (23) facing away from the first side of the first positioning protrusion (23) is no less than an initial height of a spring wire (13) of the spring body (1) between the two positioning rings (12), and the two positioning protrusions (23) are buckled between the two positioning rings (12).

8. The two or more springs (10) according to claim 6 and/or 7, **characterized in that**: a distance between a second side of a first positioning protrusion (23) of the two positioning protrusions (23) and a second side of a second positioning protrusion (23) of the two positioning protrusions (23) facing the second side of the first positioning protrusion (23) is no more than a compressed height of a spring wire (13) of the spring body (1) between the two positioning rings (12), and the two positioning rings (12) are buckled between the two positioning protrusions (23).

9. The two or more springs (10) according to any one or more of claims 1 to 8, **characterized in that**: the connecting structure (21) of the first spring (10) and the connecting structure (21) of the second spring (10) are connected together through a pin connection, a buckle connection, an insertion connection, or a fixation using a positioning block.

10. An elastic mattress, **characterized in that**: an elastic layer of the elastic mattress comprises a plurality of the two or more springs (10) according to any one or more of claims 1-9.

## Patentansprüche

1. Zwei oder mehrere Federn (10) mit wenigstens einem Positionierungsring (12), jede der zwei oder mehreren Federn (10) weist einen Federkörper (1) mit einer durch Wicklung gebildeten spiralförmigen Form auf, zwei Enden des Förderkörpers (1) sind gewickelt, um zwei Endoberflächenringe (11) zu bilden, wobei der Federkörper (1) den wenigstens einen Positionierungsring (12) aufweist, der wenigstens eine Positionierungsring (12) ist ein Wicklungsring des Federkörpers (1), der wenigstens eine Positionierungsring (12) ist im Wesentlichen parallel zu den zwei Endoberflächenringen (11) oder ist im Wesentlichen senkrecht zu einer Richtung einer elastischen Kraft des Federkörpers (1), und der wenigstens eine Positionierungsring (12) ist wenigstens von einem beanspruchendem Ende des Federkörpers (1) um 1/4 einer Länge der zwei oder mehreren Federn (10) beabstandet, wobei
jede der wenigstens zwei Federn (10) einen oder mehrere Verbindungstaillenringe (2) aufweist, der wenigstens eine Positionierungsring (12) ist an eine oder mehrere Innenwände der einen oder mehreren Verbindungstaillenringe (2) schnallenartig befestigt, und eine oder mehrere Außenwände der einen oder mehreren Verbindungstaillenringe (2) weisen jeweils eine Verbindungsstruktur (21) auf; und zwei der wenigstens zwei Federn (10) sind durch die Verbindungsstruktur (21) einer ersten Feder (10) der wenigstens zwei Federn (10) und die Verbindungsstruktur (21) einer zweiten Feder (10) der wenigstens zwei Federn (10), die an die erste Feder (10) angrenzt, verbunden.

2. Die zwei oder mehreren Federn (10) nach Anspruch 1, **dadurch gekennzeichnet, dass**: eine Länge des wenigstens einen Positionierungsrings (12) erstreckt sich nicht weniger als 180 Grad.

3. Die zwei oder mehreren Federn (10) nach Anspruch 1 und/oder 2, **dadurch gekennzeichnet, dass**: die ein oder mehreren Verbindungstaillenringe weisen wenigstens zwei Verbindungstaillenringe (2) auf, der wenigstens eine Positionierungsring (12) weist eine Vielzahl von Positionierungsringen (12) auf, und die wenigstens zwei Verbindungstaillenringe (2) sind jeweils an den Federkörper (1) durch die Vielzahl von Positionierungsringen (12) schnallenartig befestigt.

4. Die zwei oder mehreren Federn (10) nach einem oder mehreren der Ansprüche 1 bis 3, **dadurch gekennzeichnet, dass**: die Innenwand der einen oder mehreren Verbindungstaillenringe (2) weist eine Positionierungsnut (22) auf, die parallel zu jedem des wenigstens einen Positionierungsrings (12) ist, eine Breite der Positionierungsnut (22) ist nicht mehr als eine Höhe von jedem des wenigstens einen Positionierungsrings (12), und zwar nach dem zusammengedrückt werden, und jeder des wenigstens einen Positionierungsrings (12) ist an einer Innenseite der Positionierungsnut (22) schnallenartig befestigt.

5. Die zwei oder mehreren Federn (10) nach einem oder mehreren der Ansprüche 1 bis 4, **dadurch gekennzeichnet, dass**: eine Länge des wenigstens einen Positionierungsrings (12) erstreckt sich nicht weniger als 360 Grad.

6. Die zwei oder mehreren Federn (10) nach einem oder mehreren der Ansprüche 1 bis 5, **dadurch gekennzeichnet, dass**: der wenigstens eine Positionierungsring (12) weist zwei Positionierungsringe (12) auf, die Innenwand der einen oder mehreren Verbindungstaillenringe (2) weist zwei Positionierungsvorsprünge (23) entlang der Richtung der elastischen Kraft des Federkörpers (1) auf, und die zwei Positionierungsvorsprünge (23) sind an den zwei Positionierungsringen (12) schnallenartig befestigt.

7. Die zwei oder mehreren Federn (10) nach Anspruch 6, **dadurch gekennzeichnet, dass**: ein Abstand zwischen einer ersten Seite eines ersten Positionierungsvorsprungs (23) der zwei Positionierungsvorsprünge (23) und einer ersten Seite eines zweiten Positionierungsvorsprungs (23) der zwei Positionierungsvorsprünge (23), welche von der ersten Seite des ersten Positionierungsvorsprungs (23) wegweist ist, ist nicht kleiner als eine Anfangshöhe eines Federdrahts (13) des Federkörpers (1) zwischen den zwei Positionierungsringen (12), und die zwei Positionierungsvorsprünge (23) sind zwischen den zwei Positionierungsringen (12) schnallenartig befestigt.

8. Die zwei oder mehreren Federn (10) nach Anspruch 6 und/oder 7, **dadurch gekennzeichnet, dass**: ein Abstand zwischen einer zweiten Seite eines ersten Positionierungsvorsprungs (23) der zwei Positionierungsvorsprünge (23) und einer zweiten Seite eines zweiten Positionierungsvorsprungs (23) der zwei Positionierungsvorsprünge (23), welche zu der zweiten Seite des ersten Positionierungsvorsprungs (23) hinweist ist, ist nicht mehr als eine zusammengedrückte Höhe eines Federdrahts (13) des Federkörpers (1) zwischen den zwei Positionierungsringen (12), und die zwei Positionierungsringe (12) sind zwischen den zwei Positionierungsvorsprüngen (23) schnallenartig befestigt.

9. Die zwei oder mehreren Federn (10) nach einem oder mehreren der Ansprüche 1 bis 8, **dadurch gekennzeichnet, dass**: die Verbindungsstruktur (21) der ersten Feder (10) und die Verbindungsstruktur (21) der zweiten Feder (10) sind durch eine Stiftverbindung, eine Schnallenverbindung, eine Einsetzverbindung oder eine Befestigung unter Verwendung eines Positionierblocks miteinander verbunden.

10. Eine elastische Matratze, **dadurch gekennzeichnet, dass**: eine elastische Schicht der elastischen Matratze weist eine Vielzahl der zwei oder mehreren Federn (10) nach einem oder mehreren der Ansprüche 1-9 auf.

## Revendications

1. Deux ressorts (10) ou plus ayant au moins un anneau de positionnement (12), chacun des deux ressorts (10) ou plus comprenant un corps de ressort (1) ayant une forme de spirale formée par enroulement, deux extrémités du corps de ressort (1) sont enroulées pour former deux anneaux de surface d'extrémité (11), dans lequel le corps de ressort (1) comprend l'au moins un anneau de positionnement (12), l'au moins un anneau de positionnement (12) est un anneau d'enroulement du corps de ressort (1), l'au moins un anneau de positionnement (12) est sensiblement parallèle aux deux anneaux de surface d'extrémité (11) ou est sensiblement perpendiculaire à une direction d'une force élastique du corps de ressort (1), et l'au moins un anneau de positionnement (12) est espacé d'au moins une extrémité de contrainte du corps de ressort (1) sur 1/4 d'une longueur des deux ressorts (10) ou plus, dans lequel chacun des au moins deux ressorts (10) comprend un ou plusieurs anneaux de ceinture de raccordement (2), l'au moins un anneau de positionnement (12) est attaché à une ou plusieurs parois intérieures des un ou plusieurs anneaux de ceinture de raccordement (2), et une ou plusieurs parois extérieures des un ou plusieurs anneaux de ceinture de raccordement (2) comprennent chacune une structure de raccordement (21) ; et deux des au moins deux ressorts (10) sont raccordés par le biais de la structure de raccordement (21) d'un premier ressort (10) des au moins deux ressorts (10) et de la structure de raccordement (21) d'un deuxième ressort (10) des au moins deux ressorts (10) adjacent au premier ressort (10).

2. Deux ressorts (10) ou plus selon la revendication 1, **caractérisés en ce que** : une longueur de l'au moins un anneau de positionnement (12) s'étend sur au moins 180 degrés.

3. Deux ressorts (10) ou plus selon la revendication 1 et/ou 2, **caractérisés en ce que** : les un ou plusieurs anneaux de ceinture de raccordement comprennent au moins deux anneaux de ceinture de raccordement (2), l'au moins un anneau de positionnement (12) comprend une pluralité d'anneaux de positionnement (12), et les au moins deux anneaux de ceinture de raccordement (2) sont respectivement attachés au corps de ressort (1) par le biais de la pluralité d'anneaux de positionnement (12).

4. Deux ressorts (10) ou plus selon une ou plusieurs des revendications 1 à 3,
**caractérisés en ce que** : la paroi intérieure des un ou plusieurs anneaux de ceinture de raccordement (2) comprend une rainure de positionnement (22) parallèle à chacun de l'au moins un anneau de positionnement (12), une largeur de la rainure de positionnement (22) n'est pas supérieure à une hauteur de chacun de l'au moins un anneau de positionnement (12) après avoir été comprimée, et chacun de l'au moins un anneau de positionnement (12) est attaché à un côté intérieur de la rainure de positionnement (22).

5. Deux ressorts (10) ou plus selon une ou plusieurs des revendications 1 à 4, **caractérisés en ce que** : une longueur de l'au moins un anneau de positionnement (12) s'étend sur au moins 360 degrés.

6. Deux ressorts (10) ou plus selon une ou plusieurs des revendications 1 à 5, **caractérisés en ce que** : l'au moins un anneau de positionnement (12) comprend deux anneaux de positionnement (12), la paroi intérieure des un ou plusieurs anneaux de ceinture de raccordement (2) comprend deux saillies de positionnement (23) le long de la direction de la force élastique du corps de ressort (1), et les deux saillies de positionnement (23) sont attachées aux deux anneaux de positionnement (12).

7. Deux ressorts (10) ou plus selon la revendication 6, **caractérisés en ce que** : une distance entre un premier côté d'une première saillie de positionnement (23) des deux saillies de positionnement (23) et un premier côté d'une deuxième saillie de positionnement (23) des deux saillies de positionnement (23) opposé au premier côté de la première saillie de positionnement (23) n'est pas inférieure à une hauteur initiale d'un fil à ressort (13) du corps de ressort (1) entre les deux anneaux de positionnement (12), et les deux saillies de positionnement (23) sont attachées entre les deux anneaux de positionnement (12).

8. Deux ressorts (10) ou plus selon la revendication 6 et/ou 7, **caractérisés en ce que** : une distance entre un deuxième côté d'une première saillie de positionnement (23) des deux saillies de positionnement (23) et un deuxième côté d'une deuxième saillie de positionnement (23) des deux saillies de positionnement (23) opposé au deuxième côté de la première saillie de positionnement (23) n'est pas supérieure à une hauteur comprimée d'un fil à ressort (13) du corps de ressort (1) entre les deux anneaux de positionnement (12), et les deux anneaux de positionnement (12) sont attachés entre les deux saillies de positionnement (23).

9. Deux ressorts (10) ou plus selon une ou plusieurs des revendications 1 à 8, **caractérisés en ce que** : la structure de raccordement (21) du premier ressort (10) et la structure de raccordement (21) du deuxième ressort (10) sont raccordées entre elles par un raccord à goupille, un raccord à attache, un raccord par insertion ou une fixation à l'aide d'un bloc de positionnement.

10. Matelas élastique, **caractérisé en ce que** : une couche élastique du matelas élastique comprend une pluralité des deux ressorts (10) ou plus selon une ou plusieurs des revendications 1 à 9.
